(19) Europäisches Patentamt

European Patent Office

Office européen des brevets

(11) **EP 1 105 631 B1**

(12) **EUROPÄISCHE PATENTSCHRIFT**

(45) Veröffentlichungstag und Bekanntmachung des Hinweises auf die Patenterteilung:
**09.10.2002 Patentblatt 2002/41**

(21) Anmeldenummer: **99941597.9**

(22) Anmeldetag: **11.08.1999**

(51) Int Cl.$^7$: **F02B 27/02**

(86) Internationale Anmeldenummer:
**PCT/EP99/05907**

(87) Internationale Veröffentlichungsnummer:
**WO 00/011332 (02.03.2000 Gazette 2000/09)**

(54) **ANSAUGVORRICHTUNG FÜR EINE BRENNKRAFTMASCHINE**

INDUCTION DEVICE FOR AN INTERNAL COMBUSTION ENGINE

DISPOSITIF D'ASPIRATION POUR MOTEUR A COMBUSTION INTERNE

(84) Benannte Vertragsstaaten:
**AT BE CH CY DE DK ES FI FR GB GR IE IT LI LU MC NL PT SE**

(30) Priorität: **20.08.1998 DE 19837773**

(43) Veröffentlichungstag der Anmeldung:
**13.06.2001 Patentblatt 2001/24**

(73) Patentinhaber: **FILTERWERK MANN & HUMMEL GmbH**
**71631 Ludwigsburg (DE)**

(72) Erfinder:
• **LEIPELT, Rudolf**
**D-71672 Marbach (DE)**

• **PAFFRATH, Holger**
**D-71636 Ludwigsburg (DE)**

(74) Vertreter: **Voth, Gerhard, Dipl.-Ing.**
**FILTERWERK MANN + HUMMEL GMBH**
**Postfach 4 09**
**71631 Ludwigsburg (DE)**

(56) Entgegenhaltungen:
| | |
|---|---|
| **EP-A- 0 225 620** | **EP-A- 0 848 145** |
| **WO-A-98/35146** | **DE-A- 3 843 690** |
| **DE-A- 4 133 815** | **DE-A- 19 523 107** |

EP 1 105 631 B1

**Beschreibung**

Stand der Technik

Die Erfindung betrifft eine Ansaugvorrichtung für eine Brennkraftmaschine nach dem Oberbegriff des Hauptanspruchs.

Eine solche Ansaugvorrichtung ist beispielsweise aus der DE-OS 39 21 081 bekannt. Diese bekannte Ansaugvorrichtung mit einer Saugrohranlage für eine Mehrzylinder-Brennkraftmaschine weist einen zylindrischen Ansaugverteilerraum und zu den einzelnen Zylindern führende Einzelsaugrohre auf, die um den Ansaugverteilerraum herum geführt und in Längsrichtung desselben nebeneinander angeordnet sind. Zur Erzielung von zwei unterschiedlichen Schwingrohrlängen steht jedes einzelne Saugrohr mit dem Ansaugverteilerraum über zwei in einem Winkelabstand voneinander in der Umfangswand des Ansaugverteilerraums vorgesehene Steueröffnungen in Verbindung.

In dem Ansaugverteilerraum dieser bekannten Ansaugvorrichtung ist ein rohrförmiger Drehschieber angeordnet, der für jedes Einzelsaugrohr mindestens einen Steuerschlitz aufweist. Dieser Steuerschlitz steht in einer Endstellung des Drehschiebers mit der ersten Steueröffnung in Verbindung, während die andere Steueröffnung von der Wand des Drehschiebers abgedeckt ist. Dadurch wird eine lange Schwingrohrlänge verwirklicht. Wird der Drehschieber in seine andere Endstellung gedreht, so wird die erste Steueröffnung von der Wand des Drehschiebers abgedeckt, der Steuerschlitz kommt mit der zweiten Steueröffnung in Verbindung, wodurch eine kurze Schwingrohrlänge eingestellt wird.

Ein Nachteil dieser bekannten Einrichtung ist darin zu sehen, daß keine stufenlose Einstellmöglichkeit für die Schwingrohrlänge gegeben ist. Dies bedeutet, daß ein Optimum an Leistungsausbeute nur in zwei eng begrenzten Drehzahlbereichen der Brennkraftmaschine möglich ist. Die bekannten Einrichtungen betreffen dabei immer nur längenveränderliche Schwingrohrsauganlagen.

Es ist weiterhin aus der EP 0 848 145 A2 bekannt, eine stufenlose Veränderung der Schwingrohrlänge bei der Ansauganlage für einen V-Verbrennungsmotor vorzunehmen. Bei dieser Anordnung ist eine Trommel als Drehschieber vorhanden, in die die angesaugte Luft axial eintritt und durch die die Luft in das tangential anliegende Ansaugrohr führbar ist. Durch Drehen der Trommel ist hier die veränderbare Länge des für die Luft wirksamen Ansaugrohres auf einfache Weise einstellbar.

Für sich gesehen ist ebenfalls bekannt, eine Umschaltung zwischen einer sogenannten Schwingrohr- und Resonanzrohraufladung in der Ansauganlage vorzunehmen.

Es ist aus der DE 38 43 690 eine Ansauganlage für eine Brennkraftmaschine bekannt, welche über ein Schwingrohrsystem und ein Resonanzsystem verfügt. Das Schwingrohrsystem umfasst je Zylinder der Brennkraftmaschine zwei Schwingrohre mit unterschiedlichen Abmessungen. Kurze stutzenartige Schwingrohre verlaufen quer zu einem länglich ausgestalteten Ausgleichsbehälter. Sie verfügen über einen relativ großen Durchmesser und stehen mit langen, am Außenumfang des Ausgleichsbehälter verlaufenden Schwingrohren in Verbindung. Die langen Schwingrohre verfügen über einen relativ kleinen Durchmesser und münden in Resonanzkammern, welche in dem Ausgleichsbehälter angeordnet sind. Mit den Resonanzkammern in Verbindung stehende Resonanzrohre sind ebenfalls in dem Ausgleichsbehälter angeordnet. Die Resonanzrohre können in Abhängigkeit der Drehzahl teleskopartig verlängert oder verkürzt werden.

Weiterhin offenbart die WO 98/35146 eine Ansaugvorrichtung für eine Brennkraftmaschine mit einer in vorgegebenen Grenzen veränderbaren Länge eines Ansaugrohres. Das Ansaugrohr ist tangential um einen kreisförmigen Einlass für die angesaugte Luft und von dort zum Zylinderblock der Brennkraftmaschine geführt. Es ist ein Drehschieber vorhanden, in welchen die angesaugte Luft axial eintritt. Der Drehschieber weist eine Verbindungsöffnung auf, durch welche die Luft in das tangential anliegende Ansaugrohr führbar ist. Durch Drehen des Drehschiebers ist die veränderbare Länge des für die Luft wirksamen Ansaugrohres einstellbar.

Aufgabenstellung

Es ist somit Aufgabe der Erfindung, eine Ansaugvorrichtung zu schaffen, die eine stufenlose Veränderung der Saugrohrgeometrie erlaubt und einfach in modularer Bauweise herstellbar ist.

Vorteile der Erfindung

Erfindungsgemäß wird die Aufgabe dadurch gelöst, dass bei einer Ansaugvorrichtung der eingangs genannten Art in vorteilhafter Weise ein modulares Saugrohrkonzept, insbesondere für Mehrzylinderbrennkraftmaschinen mit den Merkmalen des Kennzeichens des Hauptanspruchs realisiert wird.

Das erfindungsgemäße Saugrohrkonzept betrifft eine Ansaugvorrichtung mit einer besonders vorteilhaften Umschaltung zwischen Resonanz- und Schwingrohraufladung der angesaugten Luft. Es wird hierbei ebenfalls eine stufenlose Schwingrohrlängenverstellung und eine stufenlose Resonanzrohrlängenverstellung ermöglicht, wobei auch eine stufige Resonanzrohrquerschnittverstellung durchführbar ist und mit der Schwingrohrsauganlage mitgeschaltet werden kann. Alle Verstelleingriffe können mit erfindungsgemäßen Ausführungsformen in vorteilhafter Weise, beispielsweise mit nur einem gemeinsamen Stellmotor, erfolgen; Teilfunktionen, z. B. Resonanzrohrquerschnittsveränderungen können dabei aber auch mit einem separaten Stellmotor durchgeführt werden.

Als wesentliche Vorteile des erfindungsgemäßen Saugrohrkonzeptes sind vor allem der modulare Aufbau anzuführen, der das Prinzip der Ansaugvorrichtung auch für z.B. 3- ,4- oder allg. Mehrzylinder-Motoren geeignet macht. Weiterhin sind auf einfache Weise Veränderungen des Resonanz- oder Schwingrohrquerschnitts (z.B. für Motoren einer Familie mit gleichem Zylinderabstand) durch den erfindungsgemäßen Einsatz von Verstellscheiben mit kleinerem oder größerem Außendurchmesser durchzuführen.

Bei weiterer Ausführungsform der erfindungsgemäßen Ansaugvorrichtung mit stufenlos verstellbaren Rohrlängen kann die erwähnte Umschaltung von Resonanzaufladung zu Schwingaufladung auch mit einer anderen Resonanzschaltung durchgeführt werden.

Bei den zuvor beschriebenen Resonanzaufladesysteme ist der Luftaufwand der Brennkraftmaschine in einem gewissen Drehzahlbereich in vorteilhafter Weise verbessert. Die Ursache für das bessere Betriebsverhalten mit Schwingrohraufladung bei diesen Motordrehzahlen liegt darin, daß das Resonanzsystem und das Schwingrohrsystem nur in einem bestimmten Bereich gut aufeinander abgestimmt sind. Bei anderen Drehzahlen bewirkt das dort schlecht abgestimmte Gesamtsystem aus Resonanz- und Schwingrohren eine Verschlechterung des Betriebsverhaltens, so dass dort, wie beschrieben, auf eine Schwingrohraufladung umgeschaltet wird.

Die Umschaltung kann gemäß eines Ausführungsbeispiels dadurch umgangen werden, dass die Längen von Resonanzrohr und Schwingrohr bei jeder Drehzahl optimal aufeinander abgestimmt werden. Es kann dann durchgängig in jedem Betriebspunkt der Brennkraftmaschine ein Resonanzaufladesystem benutzt werden. Der Aufwand für eine besondere Resonanzklappe entfällt hier und das Betriebsverhalten des Motors wird je nach Auslegung sogar verbessert.

Bezüglich der Schwingrohre ist bei niedrigen Drehzahlen eher eine lange, bei hohen Motordrehzahlen eher eine kurze Schwingrohrlänge von Vorteil. Bei den Resonanzrohren verhält sich dieser Zusammenhang ähnlich. Unterschiedlich bei den beiden Rohren ist das Niveau der Rohrlänge und die bei Drehzahlerhöhung unterschiedlich starke Abnahme der Rohrlänge.

Worden mit n die Drehzahl der Brennkraftmaschine und mit LS und LR die Langen von Schwingrohr (LS) und Resonanzrohr (LR) bezeichnet, so gilt für die optimalen Rohrlängen:

$$LS_{opt} = LS_{max} - KS*(n-n(LS_{max}))$$

und

$$LR_{opt} = LR_{max} - KR*(n-n(LR_{max})),$$

wobei KS und KR Konstanten für die Schwingrohre (KS) und Resonanzrohre (KR) und $n(LS_{max})$ und $n(LR_{max})$ die zugehörigen Drehzahlen für die maximale Schwingrohrlänge bzw. Resonanzrohrlänge sind. Die Konstanten KS und KR können hierbei unterschiedlich sein, d. h. bei einer bestimmten Drehzahlerhöhung müssen die Rohrlängen von Schwingrohr und Resonanzrohr um unterschiedliche Beträge verkürzt werden.

Die Realisierung einer solchen Resonanzaufladung ist mit einer entsprechenden Abwandlung der zuvor beschriebenen Ausführungsbeispiele auf einfache Weise möglich. Sind die Rohrlängen von Schwingrohr und Resonanzrohr quasi auf einer Scheibe aufgewickelt, so lassen sich Unterschiede in den Konstanten KS und KR einfach durch verschiedene Durchmesser der Verstellscheiben realisieren.

Für den Fall, dass KR kleiner ist als KS, d.h. die Resonanzrohrlänge sich nicht so stark ändert wie die Schwingrohrlänge, läge der Unterschied darin, dass die Verstellscheiben der Resonanzrohre kleiner im Durchmesser wären und das Gehäuse für diese Rohre entsprechend eingezogen wäre, um den Rohrquerschnitt beizubehalten. Für den Fall, daß KS kleiner ist als KR, verhielte sich der Sachverhalt umgekehrt, d.h. die Scheiben der Schwingrohre wären kleiner. Beim Aufbau des Saugrohres nach einem der eingangs beschriebenen Ausführungsbeispiele ist darauf zu achten, dass die axialen Reibflächen an den Verstellscheiben von Schwingrohr und Resonanzrohr auf einem gleichem Radius liegen, auch wenn sich die Außendurchmesser der Verstellscheiben unterscheiden.

Bei dem zuletzt beschriebenen Ausführungsbeispiel kann die Resonanzklappe, d.h. die Scheiben mit Fenstern und gegebenenfalls einer Irisblende und damit im Prinzip die Resonanzschaltung entfallen. Stattdessen würden geschlossene Wände mit mittigem Durchtritt für die Welle den Resonanzsammler abschließen. Der Aufbau des Saugrohres in der erfindungsgemäßen Ansaugvorrichtung bliebe ansonsten unverändert.

Bei einer weiteren vorteilhaften Ausführungsform der erfindungsgemäßen Ansaugvorrichtung wird in vorteilhafter Weise der Aufbau des Gehäuses der Ansaugvorrichtung und insbesondere die interne Abdichttechnik so verbessert, dass das Saugrohr kostengünstiger hergestellt werden kann und dabei auch die Modularisierung gefördert ist.

Die Ansaugvorrichtung wird hierbei nicht mehr längs, d.h. in der Ebene der Drehachse der im Saugrohr enthaltenen Verstellscheiben, sondern senkrecht dazu geteilt. Das umgebende Gehäuse wird ähnlich wie das Innenleben, die Verstellscheiben, aus einzelnen Scheiben aufgebaut. Die ansonsten notwendigen Dichtscheiben entfallen. Stattdessen werden an die Verstellscheiben, vorzugsweise an den äußeren Teil der jeweils aus zwei Teilen aufgebauten Verstellscheibe, Dichtlippen angespritzt

Die Dichtlippen dieser Ausführungsform dichten zwischen den Verstellscheiben und der in das Saugrohr hineinragenden umlaufenden Gehäusewand, die die Funktion der Dichtscheiben übernimmt. Die Verstellscheibe, oder nur deren Teil, der die Dichtlippen trägt, muss hier nicht aus dem Gehäusewerkstoff sein. Das Material soll die Erfordernisse der Dichtlippengeometrie und der Reibung zum Gehäuse berücksichtigen. Die Anforderungen hinsichtlich Maßhaltigkeit und Planlauf an die Verstellscheiben werden mit diesem alternativen Konzept geringer.

Die Verstellscheiben sind nachwievor auf einer Welle aufgefädelt. Sie sind nicht mehr mit einer Feder verspannt. Zumindest an den Stirnseiten des Gehäuses sind Endscheiben mit einer Wellenlagerung vorzusehen. Der Antrieb der Welle erfolgt in der weiter oben beschriebenen Art und Weise zur stufenlosen Verstellung der jeweiligen Rohrlängen.

Die Gehäusescheiben des zuletzt erwähnten Ausführungsbeispiels sind, abgesehen von den Endstücken, die evtl. anders ausgeführt sind, alle identisch. Die Verstellscheiben ebenso. Der modulare Aufbau des Saugrohres wird dadurch deutlich vereinfacht. Je nach der Zylinderzahl der Brennkraftmaschine und dem jeweiligen Saugrohrkonzept werden unterschiedlich viele Verstell- und Gehäusescheiben montiert. Je nach Konzept werden die einzelnen Gehäuse- bzw. Verstellscheiben alle in gleicher Orientierung montiert (z.B. bei Reihenmotor mit nur Schwingrohraufladung) oder wechselweise um z.B. 180° verdreht montiert (z.B. bei Kombination aus Resonanz- und Schwingrohraufladung). Die Rohrabzweige aus diesen Gehäusescheiben hinaus sollten dabei komplett in der Gehäusescheibe liegen. Die entsprechenden Rohrstücke müssen dadurch nicht durch eine Montage zweier benachbarter Gehäusescheiben erzeugt werden, wodurch die Verbindung der Gehäusescheiben untereinander deutlich vereinfacht wird.

Die Verbindung der Gehäusescheiben untereinander kann auf einfache Weise nach dem Nut und Feder Prinzip erfolgen, die Nut und die Feder haben dabei kreisförmig umlaufend eine unveränderte Geometrie. Die Verbindung kann z.B. durch Schnappen, z.B. mit einem Dichtring, oder Schweißen erfolgen. Dazu kann vorteilhafterweise das gesamte Saugrohr vormontiert und vorgespannt werden, um dann in einem Arbeitsgang alle Gehäusescheiben mittels Laserschweißen mit den jeweils benachbarten Scheiben zu verbinden.

Das Saugrohr kann zur Vereinfachung des Prinzips und der Ausführung von den dem Zylinderkopf zugewandten, d.h. stromab des Saugrohrgrundkörpers liegenden Schwingrohrendstücken getrennt werden. Die Schwingrohrendstücke und Grundkörper werden z. B. mittels Gummimuffen verbunden. Auch ein evtl. vorhandener, weiter oben beschriebener Vorsammler, bzw. die Rohrleitung zu diesem, kann auf vergleichbare Weise angebunden werden. Ist kein Vorsammler vorhanden, kann die Einströmung aus der Drosselklappe in den inneren Sammelraum auch axial erfolgen.

Das zuvor beschriebene, mit einzelnen Scheiben aufgebaute Gehäuse kann mit allen anderen Ausführungsformen kombiniert werden, wobei das Nut und Feder Prinzip in jedem fall funktioniert. Die Möglichkeit, durch entsprechende Gestaltung der durch das Gehäuse gebildeten äußeren Resonanzrohrwand ein Resonanzrohr je Resonanzsammler verschließen zu können, ist auch bei diesem Ausführungsbeispiel möglich und sinnvoll.

Zeichnung

Die Erfindung wird anhand von in der Zeichnung dargestellten Ausführungsbeispielen erläutert. Es zeigen:

Figur 1 einen Schnitt durch eine Ansaugvorrichtung mit einer Kombination aus veränderbaren Resonanz - und Schwingrohren für eine 6-zylindrige Brennkraftmaschine;

Figur 2 einen Schnitt durch ein Schwingrohr nach dem Schnitt B-B aus der Figur 1;

Figur 3 einen Schnitt durch ein Resonanzrohr nach dem Schnitt C-C aus der Figur 1;

Figur 4 eine schematische Draufsicht auf die Ansaugvorrichtung nach der Figur 1 mit einem Vorsammler für die Ansaugluft;

Figur 5 und 5a einen Schnitt durch eine mittige Antriebseinheit für die Drehung von Stellscheiben zur Veränderung der Schwing- und Resonanzrohrlängen und -querschnitte und mit Schaltscheiben nach dem Prinzip aneinander vorbeidrehender Fenster und einem Detailschnitt eines Riemenspanners ;

Figur 6 und 7 ein weiteres Ausführungsbeispiel der Schaltscheibe nach dem Prinzip der Irisblende in unterschiedlichen Schaltstellungen;

Figur 8 ein drittes Ausführungsbeispiel der Schaltscheibe nach dem Prinzip der Irisblende mit einer Vielzahl von Lamellen;

Figur 9 ein Prinzipbild der veränderbaren Resonanzvolumina in der Ansaugvorrichtung;

Figur 10 ein Diagramm der sich ergebenden Längen und Querschnitte der Schwing- und Resonanzrohre in Abhängigkeit vom Drehwinkel der Stell- und Schaltscheiben und

Figur 11 einen Schnitt durch ein Ausführungsbeispiel einer Ansaugvorrichtung mit einem aus Scheiben zusammengesetzten Gehäuse.

<u>Beschreibung der Ausführungsbeispiele</u>

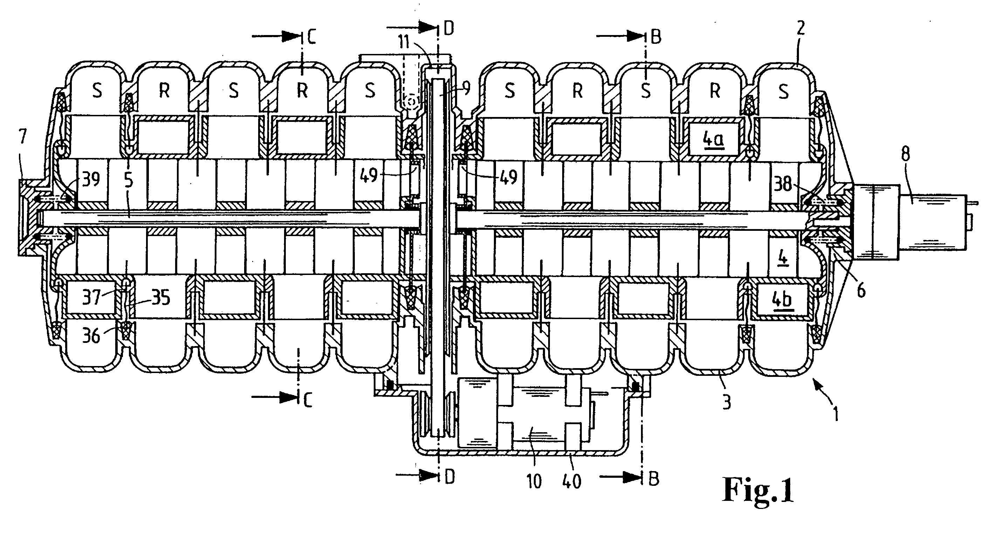

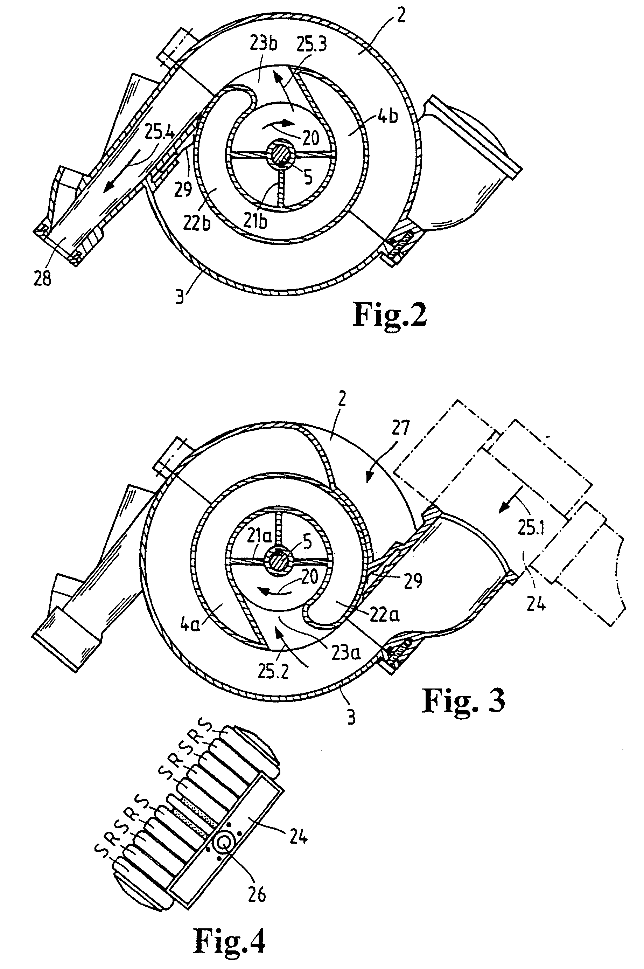

Eine in Figur 1 gezeigte Ansaugvorrichtung für eine hier nicht näher erläuterte Brennkraftmaschine weist ein Gehäuse 1 auf, das aus einzelnen Funktionsbereichen aufgebaut ist, wobei die mit S bezeichneten Bereiche Schwingrohre und die mit R bezeichneten Bereiche Resonanzrohre darstellen. Zur Erläuterung dieser Bereiche wird zusätzlich auf Figur 2 und Figur 3 verwiesen, wobei die Figur 2 einen Schnitt durch eine Schwingrohr S nach der Schnittlinie B-B aus der Figur 1 und die Figur 3 einen Schnitt durch ein Resonanzrohr R nach der Schnittlinie C-C aus der Figur 1 zeigen.

Das Schwingrohr S nach der Figur 2 ist beim Ausführungsbeispiel ein Kunststoffteil, das aus einem oberen Gehäuseteil 2, einem unteren Gehäuseteil 3 und einer drehbaren Stellscheibe 4b im Inneren besteht, wobei die jeweiligen Gehäuseteile 2 und 3 Bestandteil der entsprechenden Gehäuseteile der Ansaugvorrichtung sind. Die jeweiligen Stellscheiben 4b der Schwingrohre S und der Resonanzrohre R sind, wie aus der Figur 1 ersichtlich, auf einer drehbaren Welle 5 angeordnet. Die Welle 5 ist in zwei Lagerdeckeln 6 und 7 gelagert und kann entweder mit einem Elektromotor 8 direkt oder mit einen Riemenantrieb 9 und einem Elektromotor 10 als Aktuator angetrieben werden.

Die Verstellscheiben 4a (Figur 3) und 4b (Figur 2) können vorzugsweise aus Kunststoff sein, wobei diese evtl. mehrteilig sind und zu einer Scheibe zusammengefügt werden, durch z.B. Schnappen, Schweißen, Kleben oder ähnliches. Ein Verdrängungsvolumen in den Verstellscheiben 4a, 4b am äußeren Umfang ist geeignet, das Volumen im sich ergebenden inneren Resonanzammlervolumen auf ein gewünschtes Maximalvolumen zu begrenzen. Die Resonanzrohre R, die üblicherweise zwei Rohre von entsprechend größerem Querschnitt als die Schwingrohre sind, sind beim erfindungsgemäßen Ausführungsbeispiel für den 6-Zylindermotor aufgelöst in 2x2 Rohre von Schwingrohrdurchmesser. Damit können alle Verstellscheiben 4a, 4b mit Ausnahme der beiden innen liegenden, die wie weiter unten erläutert zugleich Schaltscheiben sind, genau gleich sein.

Die Befestigung der Verstellscheiben 4a, 4b für das Resonanzrohr R und das Schwingrohr S auf der Welle 5 erfolgt winkelversetzt (z.B.: um 180°). Mit an den Verstellscheiben 4a, 4b anliegenden Querdichtungen 29 wird ein sonst möglicher Kurzschluss der Luftströmung am Einbauort der Querdichtung 29 vermieden. Eventuell können die inneren Scheiben ( Schaltscheiben) anders ausgeführt werden, um einen größeren Querschnitt für die Umschaltung zwischen der unten noch erläuterten Schwingrohr- und Resonanzaufladung zu erhalten.

Die gesamte Ansaugvorrichtung 1 ist somit in Schalenbauweise, vorzugsweise aus Kunststoff, aufgebaut und besteht aus den zwei Gehäuseteilen 2 und 3, den Lagerdeckeln 6 und 7 für die Welle 5, wobei eine weiterer Bereich 11 der Gehäuseteile eine Abdeckung für den Riemenantrieb 9 darstellt und einem weiter unten beschriebener Deckel eines Vorsammlers für die angesaugte Luft vorhanden ist. Die Verbindung dieser Gehäuseteile kann mittels Schweißen, Schrauben und/ oder Schnappen, Kleben, Umspritzen, Warmnieten, Kaltnieten oder Klammern etc. erfolgen. Die zentrale Welle 5 kann hierbei entweder durchgehend ausgeführt werden oder im Aufsteckbereich der mittigen Riemenscheibe für den Riemenantrieb 9 geteilt sein. Die Lagerung der Welle 5 an den Stirnseiten der Ansaugvorrichtung 1 erfolgt in den Lagerdekkeln 6 und 7 bzw. in darin eingesetzte Lager. Die mittige Lageraufnahme im Bereich des Riemenantriebs 9 kann auch durch massive Stahlscheiben anstatt mit dünnen Dichtscheiben erreicht werden. Dieses sog. Stahlgerippe gibt dem Gehäuse der Ansaugvorrichtung eine Steifigkeit, wobei die Stahlscheiben gleichzeitig die Fixpunkte bzgl. des Längenausgleichs sind. Toleranzen wirken sich ausgehend von den mittigen Stahlscheiben nach außen in beide Richtungen aus.

Die Funktion der Ansaugvorrichtung wird zunächst anhand der Figuren 2 und 3 erläutert. Die Verstellscheiben 4a (Figur 3) und 4b (Figur 2) sind gemäß dem Pfeil 20 um einen Winkel von ca. 270° drehbar und weisen ein auf Speichen 21a, 21b angeordnetes Umfangselement 22a, 22b auf, das so ausgestaltet ist, dass es mindestens eine Verbindungsöffnung 23a, 23b freigibt. Die in der Ansaugvorrichtung angesaugte Luft gelangt durch einen Vorsammler 24 gemäß Pfeil 25 nach der Figur 3 in das Resonanzrohr R.

Der Vorsammler 24 ist aus Figur 4 in der Draufsicht zu entnehmen, wobei die angesaugte Luft durch eine hier nicht dargestellte Drosselklappe in den Eingang 26 des Vorsammlers 24 einströmt.

Die angesaugte Luft strömt weiter durch das Resonanzrohr R nach der Figur 3 gemäß dem Pfeil 25.1 und kann durch die Verbindungsöffnung 23a zentral in den Bereich der Verstellscheibe 4a und dann durch das gemeinsame Resonanzvolumen gemäß dem Pfeil 25.3 nach der Figur 2 durch die Verbindungsöffnung 23b in das axial benachbarte Schwingrohr S eintreten und gelangt so zum Einlass am Zylinderkopf der Brennkraftmaschine gemäß dem Pfeil 25.4 am Ausgang 28.

Bei den in den Figuren 2 und 3 dargestellten Stellungen der Verstellscheiben 4a und 4b ist somit ein kurzes Saugrohr realisiert, da die Luft nicht die ganze Länge der Rohre R und S am äußeren Umfang durchströmen muss.

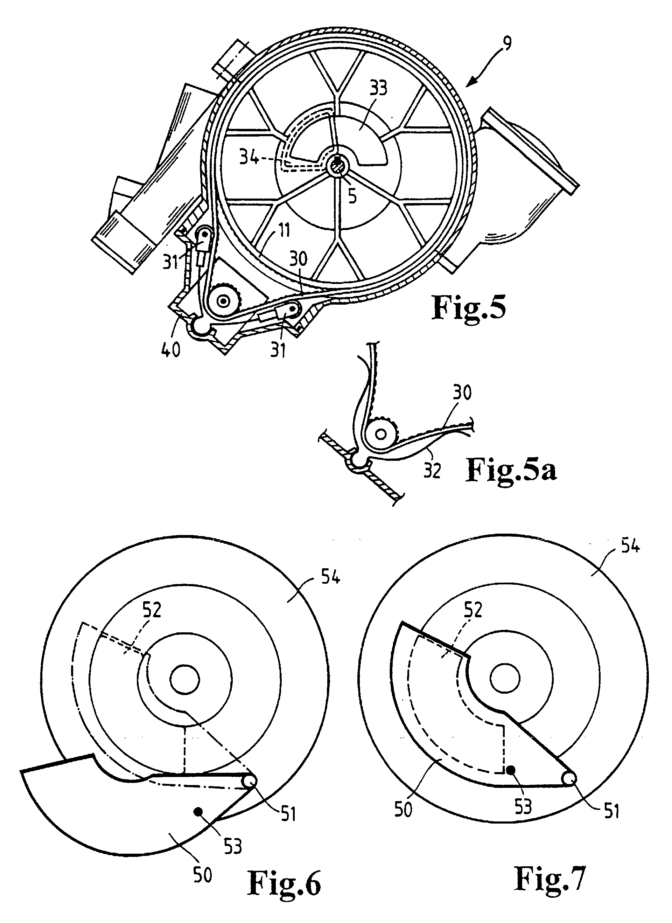

Aus Figur 5 ist der Antrieb 9 für die Verstellung der Verstellscheiben 4a und 4b über die Riemenscheibe 11 und den Elektromotor 10 gezeigt. Der Antrieb 9 kann so ausgeführt werden, dass zusätzlich eine Lageerkennung der Riemenscheibe 11 oder des Motors 10 durchführbar ist.

Eine Vorrichtung zur Spannung des Antriebsriemens 30 ist über Rollen 31 oder alternativ nach Figur 5a über einen federnden Gleitschuh 32 realisiert. Ein Gehäusedeckel 40 des Elektromotors 10 trägt hier gleichzeitig den Riemenspanner 31 oder 32 und sorgt gleichzeitig für die Befestigung des Elektromotors 10. Diese Abdeckung 40 kann schwingungsgedämpft ausgeführt sein. Die Vorrichtung zur Riemenspannung muß den beiden Drehrichtungen Rechnung tragen, und kann daher in Form einer beidseitig von außen den Riemen 30 spannenden Einheit, wie erläutert mit Rolle 31 oder Gleitschuh 32, ausgeführt sein. Eine im Gehäusedeckel 40 drehbare Lagerung der Riemenspanneinrichtung beeinflußt deren Funktion positiv, da der Leertrum stärker gespannt wird, wenn der Lasttrum den Riemenspanner auf seiner Seite wegbiegt.

Als Ausführungsformen des elektromotorischen Antriebs 9 bzw. 10 kommen auch weitere Aktuatoren in Frage. Zum Beispiel ein Schrittmotor, der eventuell mit einer integrierten elektronischen Ansteuerung versehen ist oder ein Gleichstrommotor mit einer Lageerkennung, zum Beispiel über ein Potentiometer oder einen Inkrementalgeber. Der Anbau dieser Aktuatoren kann alternativ zur dargestellten Ausführungsform auch Achse in Achse stirnseitig abstehend erfolgen. Er kann baukastenartig links oder rechts anbaubar mit Stirnradgetriebe sein, stirnseitig anliegend mit Schneckentrieb, stirnseitig nach innen eingesteckt oder in den Gehäusedeckel integriert sein.

Weiterhin ist in der Figur 5 entsprechend einem Schnitt D-D in der Figur 1 eine Vorrichtung zur Umschaltung zwischen Resonanz- und Schwingrohrauflaudung in der Ansaugvorrichtung gezeigt, wobei auf der Welle 5 eine entsprechend modifizierte Verstellscheibe mit einem drehenden Fenster 33 und eine feststehende Dichtschaltscheibe mit einem Fenster 34 vorhanden ist, deren Funktion weiter unten erläutert wird.

Auf der Welle 5 sind auch, wie aus der Figur 1 ersichtlich, die Verstellscheiben 4a, 4b (hier in Summe 10 Stück) verdrehsicher befestigt, die aber leicht taumelnd gelagert sind, um einen eventuellen Planschlag auszugleichen. Die Verstellscheiben 4a für die Schwingrohre S und 4b für die Resonanzrohre R liegen wechselweise nebeneinander und drehen sich gleichsinnig. Die Schwingrohre S haben den Abstand der Zylinder der angeschlossenen Brennkraftmaschine. Die Resonanzrohre R liegen in den sich ergebenden Lücken dazwischen. Dies führt zu einer sehr kompakten Bauweise.

Zwischen den Verstellscheiben 4a und 4b liegt jeweils eine, im Gehäuse feststehende Dichtgleitscheibe 35, beispielsweise aus Federstahlblech und einem äußeren angespritzten Dichtungsring 36. Der äußere, elastische Dichtungsring 36 dichtet hierbei gegen das Gehäuse 1 der Ansaugvorrichtung ab, wodurch ein zweigeteiltes Gehäuse mit der unvermeidlichen Teilungsfuge einsetzbar ist. Der innere Bereich der Federstahlscheibe 35 ist Dichtung und zugleich idealer Reibpartner der Verstellscheiben 4a und 4b, wobei der äußere Bereich der Federstahlscheibe 35 durch eine wellmembranähnliche Prägung für eine toleranzausgleichende Entkopplung zwischen der Dichtung außen und der Dicht-/ Gleitfläche innen sorgt.

Mit dem oben beschriebenen Antrieb kann über eine Drehung der Achse 5 das anhand der Verstellscheiben 4a und 4b nach den Figuren 2 und 3 beschriebene Verstellprinzip für die Veränderung der Schwing- und Resonanzrohrlängen und -querschnitte in Abhängigkeit vom Verstellwinkel durchgeführt werden. Wie erwähnt sind die Verstellscheiben 4a und 4b in den Figuren in der kurzen Stellung dargestellt. Die Verstellscheiben 4a und 4b können um ca. 270° im Uhrzeigersinn gedreht werden. Da hier alle Verstellungen von ein und dem selben Antrieb 9 ausgeführt werden, sind die Größen bei festliegender Geometrie nicht unabhängig voneinander einstellbar. Das gegenseitige Zusammenspiel der einzelnen Veränderungen muß bereits bei der Konstruktion berücksichtigt werden.

Abweichend vom hier dargestellten Konzept kann z.B. die anhand der Figur 5 beschrieben Umschaltung zwischen Schwingrohr- und Resonanzrohraufladung oder die Resonanzrohrquerschnittsänderung auch mit einem separatem Stellmotor erfolgen. Durch das Einfügen von Freiläufen und Federn können z.B. Resonanzrohrverstellscheiben 4b und Schwingrohrverstellscheiben 4a funktionell entkoppelt werden.

In dem in der Figur 5 dargestellten Fall handelt es sich um eine Schwingrohraufladung, wenn sich beide Resonanzsammlervolumen 42 und 43 durch das Öffnen des Verbindungsquerschnitts der Fenster 33 und 34 nahezu wie ein einziger Resonanzsammler verhalten. Resonanzaufladung liegt vor, wenn der Verbindungsquerschnitt geschlossen ist. Die Umschaltung erfolgt mittels der anhand der Figur 5 beschriebenen Verstell- und Dichtschaltscheiben, die gegeneinander verdrehbarer sind und von denen eine gehäusefest ist, d.h. sich nicht dreht. Die andere kann gegenüber den Verstellscheiben 4a und 4b fest sein oder auch mittels Freilauf, Feder oder ähnlichem entkoppelt werden, so daß der maximale Verdrehwinkel dieser Scheiben ungleich dem der Verstellscheiben sind (in diesem Fall sind evtl. auch größere Fensterquerschnitte realisierbar). Der Verbindungsquerschnitt zwischen den Resonanzsammlern 42 und 43 Sammlern ist geöffnet, wenn sich die Fenster 3 und 34 in beiden Schaltscheiben überdecken, sonst ist er geschlossen.

Die Gestaltung der Geometrie der Fenster nach der Figur 5 kann zur Gestaltung der Öffnungscharakteristik ( hier der Öffnungsquerschnitt zwischen den Resonanzvolumen 42 und 43 über dem Verdrehwinkel) benutzt werden. Der Querschnitt sollte bei 6-Zylindermotoren mindestens 1,5 bis 2,0 mal so groß sein wie der Schwingrohrquerschnitt. Alternativ sind auch Lösungen nach dem Prinzip eines Foto-Objektives mit einer Irisblende möglich, die in Figur 6, Figur 7 und Figur 8 dargestellt sind. Dabei werden bei der Figur 6 und 7 schwertartige Lamellen 50 um eine Achse 51 in die Ebene des Fensters 52 geschwenkt. Diese Lamellen 50 können das Fenster 52 freigeben oder dicht verschließen. Die Ansteuerung kann mittels eines Nockens 53 an der Lamelle 50 und einer Führung durch die verstellscheibenfeste Dichtschaltscheibe 54 erfolgen. Die Führung kann dabei komplett von dieser Dichtschaltscheibe 54 übernommen werden, es sind keine Rückstellfedern oder ähnliches erforderlich.

Die Figur 6 zeigt die geöffnete und die Figur 7 die geschlossene Stellung.

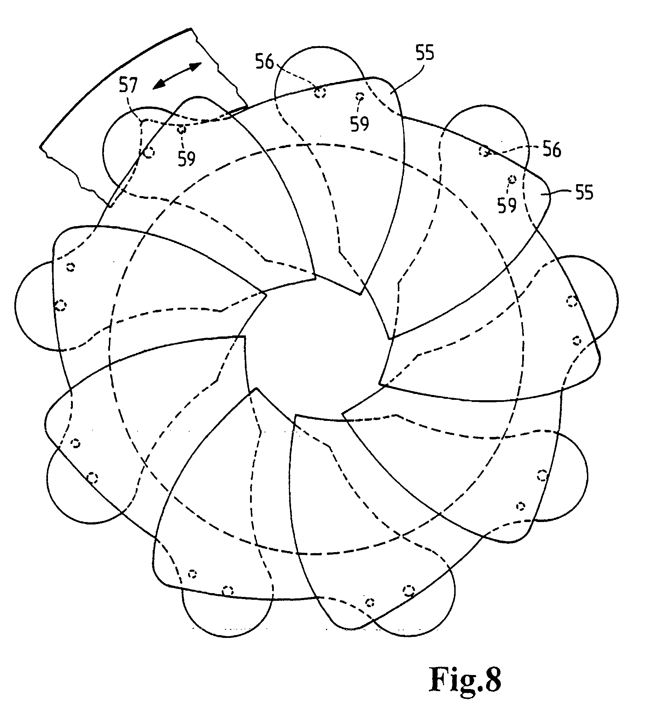

Aus Figur 8 ist als drittes Ausführungsbeispiel eine Abwandlung des Ausführungsbeispiels nach den Figuren 6 und 7 zu entnehmen. Hier sind eine Anzahl von Lamellen 55 so angeordnet, dass sie jeweils um einen Drehpunkt 56 so verschoben werden können, dass sich eine veränderliche Irisblende ergibt. Die Führung der Lamellen 55 um den Drehpunkt 56 kann hier beispielsweise mittels eines Innenzahnkranzes 57 (der hier nur ausschnittsweise gezeigt ist) an entsprechenden Nocken an den Lamellen, in vergleichbarer Weise wie anhand der Figuren 6 und 7 erläutert, vorgenommen werden.

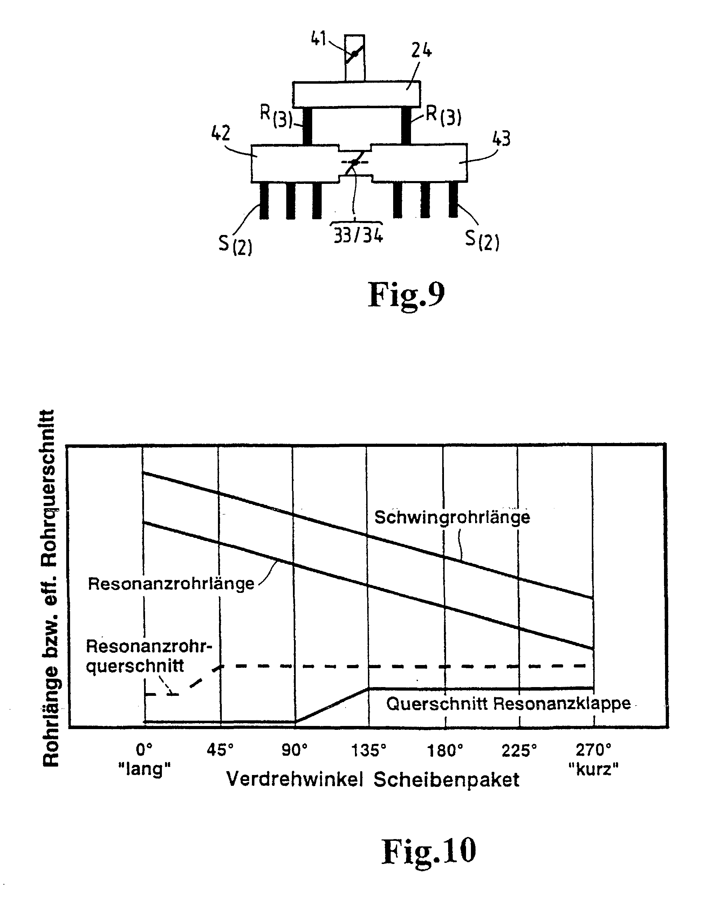

In Figur 9 ist schematisch gezeigt, wie die Ansaugluft durch eine Drosselklappe 41 in den Vorsammler 24 gelangt, dann durch die in Länge und Querschnitt veränderbaren Resonanzrohre R in ein Resonanzvolumen 42 und 43 und dann in die an die Zylindereinlässe angeschlossenen Schwingrohre S strömt. Die beiden Resonanzvolumen 42 und 43 sind über die beispielsweise in der Figur 5 dargestellten Fenster 33 und 34 zusammenschaltbar oder trennbar. Dadurch erfolgt eine Umschaltung zwischen Resonanz- und Schwingrohraufladung in der Ansaugvorrichtung.

Die Abdichtung der einzelnen Schwing- und Resonanzrohre R und S untereinander und der Schwingrohre S zum Resonanzsammler 42, 43 ist bei der Erfindung wichtig für die Funktion des Saugrohres. Die Dichtung 36 (vgl. Figur 1) am äußeren Umfang der Dichtscheiben 35 ermöglicht insbesondere die Abdichtung zwischen den Schwingrohren S an der Stoßstelle der Gehäusedeckel 2 und 3. Die Abdichtung zwischen dem Schwingrohr S und dem Resonanzsammler erfolgt an einer Reibfläche 37 zwischen Federstahlblech der Dichtscheibe 35 und der jeweiligen Verstellscheibe 4a, 4b.

Die Verstellscheibenpakete der linken und rechten Hälfte der Ansaugvorrichtung 1 werden mittels Federn verspannt. Die Stärke der Federvorspannung ist experimentell zu ermitteln. Sie muss gerade so hoch sein, dass die Scheiben dicht genug aneinander anliegen und die Reibung trotzdem noch klein genug bleibt um die nötige Antriebsleistung so gering wie möglich zu halten. Die Federspannung sollte bei Längentoleranzen in den Scheibenpaketen nicht zu stark schwanken (kleine Federkonstante). Die Federn 38 und 39 befinden sich an den Stirnseiten in den Lagerdeckeln 6 und 7.

In Figur 10 ist ein Diagramm der Veränderungen in der Geometrie der Ansaugvorrichtung 1 in Abhängigkeit vom Verdrehwinkel der angetriebenen Welle 5 gezeigt. Die sogenannte Schwingrohrlänge ist der kürzeste Weg der Rohrquerschnittsmittellinie vom Resonanzsammler bis zum Einlassventil der Brennkraftmaschine hinter dem Ausgang 28 des Schwingrohres S nach der Figur 2. Sie wird durch Verdrehen der Verstellscheiben 4b verkürzt (vorteilhafterweise z.B. bei hohen Motordrehzahlen) oder verlängert (vorteilhafterweise z. B. bei niedrigen Motordrehzahlen). Die in kurzen Stellungen abzweigenden totem Arme, d.h. die undurchströmten Rohrstücke, können bei Bedarf durch, hier nicht dargestellte, an die Verstellscheiben 4b angebrachte Zungen abgedeckt werden. Die Schwingrohrlänge wird auch verstellt, wenn es sich eigentlich um eine Resonanzaufladung handeln soll, da die Drehung miteinander gekoppelt ist. Der Einfluss dieser Verstellung ist in diesem Fall aber von geringerer Bedeutung im Vergleich zur Resonanzrohrgeometrie.

Die Resonanzrohrlänge ist der kürzeste Weg der Rohrquerschnittsmittellinie des Rohres R vom Vorsammler 24 bis zur Mündung in den Resonanzsammler nach der Verbindungsöffnung 23a nach der Figur 3. Sie wird durch Verdrehen der Verstellscheiben 4a verkürzt (vorteilhafterweise z.B. bei hohen Motordrehzahlen) oder verlängert (vorteilhafterweise z.B. bei niedrigen Motordrehzahlen). Die in kurzen Stellungen abzweigenden toten Arme können auch hier bei Bedarf durch an die Verstellscheiben 4a angebrachte Zungen abgedeckt werden. Die Resonanzrohrlänge wird auch verstellt, wenn es sich eigentlich um eine Schwingrohraufladung handeln soll, da die Drehung miteinander gekoppelt ist. Der Einfluss der Verstellung ist in diesem Fall aber von geringerer Bedeutung im Vergleich zur Schwingrohrgeometrie.

Der Resonanzrohrquerschnitt ist die Summe aller Rohrquerschnitte, die den Vorsammler 24 und einen Resonanzsammler, wie oben beschrieben, verbinden. Im Falle einer 6-zylindrigen Brennkraftmaschine liegen hier somit 2x2 Resonanzrohre vor. Davon kann jeweils eines in vorteilhafterweise bei niedrigen Motordrehzahlen verschlossen werden, um den Querschnitt zu verringern. Dies erfolgt am einfachsten mittels einer entsprechend Kanalgeometrie des Resonanzrohres R in der entsprechenden Gehäusehälfte 2 nach der Figur 3. In der langen Resonanzrohrstellung ist hierbei jeweils auf einer Seite der Ansaugvorrichtung die Mündung eines Resonanzrohres zum Resonanzsammler durch das Überdecken mit der Wand der Gehäusehälfte 2 an einer Stelle 27 verschlossen. Es sind alternativ auch Einlegeteile denkbar, die in bestimmten Positionen der Verstellscheibe 4a (in der langen Position) das Durchströmen des Resonanzrohres R verhindern,

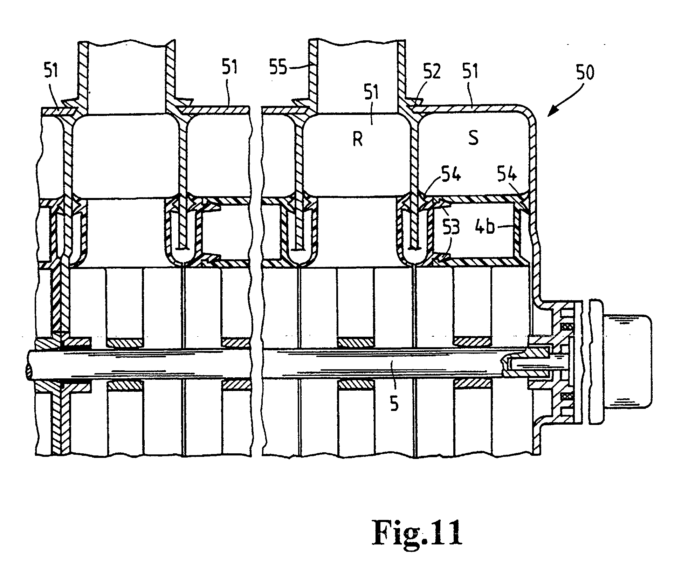

Ein Ausführungsbeispiel nach Figur 11 zeigt alternativ ein Gehäuse 50 einer Ansaugvorrichtung, die in den wesentlichen Funktionen den zuvor beschriebenen Ausführungsbeispielen entspricht, jedoch anstatt eines zweigeteilen Gehäuses aus Ober- und Unterteil das aus Scheiben 51 zusammengesetztes Gehäuse 50 aufweist. Die sich somit senkrecht zur Welle 5 erstreckenden Gehäusescheiben 51 bilden jeweils die Resonanzrohre R und die Schwingrohre S und sind an einer Fügestelle 52 jeweils dichtend aneinander gepackt und miteinander verbunden. Innen in den Rohre R und S sind die jeweiligen anhand der Figuren 2 und 3 beschriebenen Verstellscheiben 4a und 4b angeordnet, die ebenfalls aus Schalen aufgebaut sind und an einer Fügestelle 53 aneinandergefügt sind.

Die Verstellscheiben 4a und 4b nach der Figur 11 weisen an ihrem Umfang jeweils Dichtlippen 54 auf, die an der jeweiligen Scheibenwand bei der Drehung der Verstellscheiben 4a und 4b gleiten können und trotzdem eine Abdichtung für den Ansaugstrom gewährleisten. Bei dem in der Figur 11 dargestellten Schnitt ist darüber hinaus auch ein Rohrabzweig bzw. ein Rohrstück 55 für die Ankopplung des Resonanzrohres R an den Anströmpfad bzw. an den Vorsammler gezeigt. Hierbei kann dieses Rohrstück 55 komplett mit der jeweiligen Gehäusescheibe 51 hergestellt werden.

**Patentansprüche**

1. Ansaugvorrichtung einer Brennkraftmaschine, mit einer in vorgegebenen Grenzen veränderbaren Geometrie des sich ergebenden Ansaugrohres, wobei

    - wahlweise eine Resonanz- oder Schwingrohraufladung im gesamten Ansaugrohr herstellbar ist und

    - die Geometrie jeweils mindestens eines Schwingrohres (S) und eines über ein Resonanzvolumen (43,43) gekoppelten Resonanzrohres ( R) in vorgegebenen Grenzen veränderbar ist, **dadurch gekennzeichnet, dass**

    - eine der Zylinderzahl der Brennkraftmaschine entsprechende Zahl der Schwingrohre (S) mit dazwischen liegenden Resonanzrohren (R) vorhanden sind, dass

    - in den Resonanzrohren (R) von einer mittig gelagerten Welle (5) drehbar angetriebene Verstellscheiben (4a) angeordnet sind, die die wirksame Länge des Resonanzrohres (R) von einem Vorsammler (24) bis zu dem Resonanzvolumen (42,43) stufenlos verändern und dass

    - in den Schwingrohren (S) von der mittigen Welle (5) drehbar angetriebene Verstellscheiben (4b) angeordnet sind, die die wirksame Länge des Schwingrohres (S) vom Resonanzvolumen (42,43) bis zu den Zylindereinlässen der Brennkraftmaschine stufenlos verändern.

2. Ansaugvorrichtung nach Anspruch 1 , **dadurch gekennzeichnet, dass**

    - die Länge des Schwingrohres (S) und/oder des Resonanzrohres (R) stufenlos verstellbar ist.

3. Ansaugvorrichtung nach einem der vorherigen Ansprüche, **dadurch gekennzeichnet, dass**

    - die Verstellscheiben (4a,4b) der Resonanz- und Schwingrohre (R,S) drehbar miteinander mechanisch gekoppelt sind und eine gleichsinnige Veränderung der Resonanz- und Schwingrohrlängen ausführen.

4. Ansaugvorrichtung nach einem der vorhergehenden Ansprüche, **dadurch gekennzeichnet, dass**

    - sich jeweils eine gleiche Anzahl von Resonanz- und Schwingrohren (R,S) beidseitig einer Resonanzschaltung (33,34) befinden, die im geöffneten Zustand die jeweiligen Resonanzvolumen (42,43) miteinander verbindet zur Schwingrohraufladung und im geschlossenen Zustand die jeweiligen Resonanzvolumen (42,43) trennt zur Resonanzrohraufladung.

5. Ansaugvorrichtung nach Anspruch 4, **dadurch gekennzeichnet, dass**

    - ein Verstellmotor (10) sowohl für die Drehwinkeländerung der Verstellscheiben (4a,4b) und für die Betätigung der Resonanzschaltung (33,34) angeordnet ist.

6. Ansaugvorrichtung nach Anspruch 5, **dadurch gekennzeichnet, dass**

    - der Verstellmotor (19) einen mittigen Riemenantrieb (9) oder eine Getriebe antreibt, der oder das über die Welle (5) die Verstellung der Verstellscheiben (4a,4b) und der Resonanzschaltung vornimmt.

7. Ansaugvorrichtung nach Anspruch 6, **dadurch gekennzeichnet, dass**

    - die Resonanzschaltung aus einer feststehenden Dichtschaltscheibe mit einem Fenster (34) und einer mit den Verstellscheiben (4a,4b) mitdrehenden entsprechend modifizierten Verstellscheibe mit einem Fenster (33) besteht.

8. Ansaugvorrichtung nach Anspruch 6, **dadurch gekennzeichnet, dass**

    - die Resonanzschaltung aus einer feststehenden Dichtschaltscheibe mit einem Fenster (34) und einer veränderbaren irisblende mit mindestens einer Lamelle (50) besteht.

**9.** Ansaugvorrichtung nach einem der Ansprüche 1 bis 3, **dadurch gekennzeichnet, dass**

- in allen Betriebszuständen der Brennkraftmaschine eine Resonanzaufladung in der Ansaugvorrichtung (1) realisiert ist, wobei die Resonanzrohre (R) und die Schwingrohre (S) so ausgebildet sind, dass bei einer bestimmten Drehzahländerung die Resonanzrohrlängen und die Schwingrohrlängen um unterschiedliche Beträge verlängert bzw. verkürzbar sind.

**10.** Ansaugvorrichtung nach Anspruch 9, **dadurch gekennzeichnet, dass**

- die unterschiedlichen Längen der Resonanzrohre (R) und der Schwingrohre (S) durch jeweilige Verstellscheiben (4a,4b) unterschiedlichen Durchmessers realisiert sind, wobei das Gehäuse (2,3) der Ansaugvorrichtung in den Bereichen mit einer kleineren Verstellscheibe (4a,4b) entsprechend eingezogen ist, bei Erhaltung des Rohrquerschnittes.

**11.** Ansaugvorrichtung nach einem der vorhergehenden Ansprüche, **dadurch gekennzeichnet, dass**

- eine stufige Querschnittsverstellung mindestens eines Resonanzrohres (R) über eine Einschnürung der vom Gehäuse gebildeten Kanalwand in einem vorgegebenen Bereich des entsprechenden Resonanzrohres (R) durchführbar ist.

**12.** Ansaugvorrichtung nach einem der Ansprüche 1 bis 10, **dadurch gekennzeichnet, dass**

- eine stufige Querschnittsverstellung mindestens eines Resonanzrohres (R) über eine verschiebbare Wand in dem vom Gehäuse gebildeten Kanal des entsprechenden Resonanzrohres (R) durchführbar ist.

**13.** Ansaugvorrichtung nach einem der vorhergehenden Ansprüche, **dadurch gekennzeichnet, dass**

- der Antrieb (9) über einen Schrittmotor, eventuell mit integrierter Ansteuerung oder über einen Gleichstrommotor mit Drehlageerkennung erfolgt.

**14.** Ansaugvorrichtung nach einem der vorhergehenden Ansprüche, **dadurch gekennzeichnet, dass**

- eine Vorrichtung (31,32) zur Spannung des Antriebsriemens (11) im Antrieb (9) vorhanden ist, die so gestaltet ist, dass der Riemenzug in beiden Richtungen wirken kann.

**15.** Ansaugvorrichtung nach einem der vorhergehenden Ansprüche, **dadurch gekennzeichnet, dass**

- die Abdichtung der Schwingrohre (S) und Resonanzrohre (R) untereinander und zum Vorsammler (24) mittels Dichtscheiben (35) aus Federstahlblech erfolgt, die an der Stossstelle zum Gehäuse (1) der Ansaugvorrichtung eine elastische Dichtung (36) aufweisen und an einer Reibfläche (37) zwischen den Verstellscheiben (4a,4b) zu liegen kommt.

**16.** Ansaugvorrichtung nach einem der vorhergehenden Ansprüche, **dadurch gekennzeichnet, dass**

- die Abdichtung der Schwingrohre (S)und Resonanzrohre (R) untereinander und zum Vorsammler (24) mittels Dichtscheiben (35) aus Kunststoff erfolgt, die an der Stossstelle zum Gehäuse (1) der Ansaugvorrichtung eine elastische Dichtung (36) aufweisen und an einer Reibfläche (37) zwischen den Verstellscheiben (4a,4b) zu liegen kommt.

**17.** Ansaugvorrichtung nach einem der vorhergehenden Ansprüche, **dadurch gekennzeichnet, dass**

- das Gehäuse (50) der Ansaugvorrichtung (1) senkrecht derart geteilt ist, dass einzelne Scheiben (51) jeweils die Kontur der Resonanzrohre (R) und der Schwingrohre (S) mit den innenliegenden Verstellscheiben (4a,4b) bilden.

**18.** Ansaugvorrichtung nach Anspruch 17, **dadurch gekennzeichnet, dass**

- an den Verstellscheiben (4a,4b) Dichtlippen (54) angebracht sind und dass die Dichtlippen (54) zwischen den Verstellscheiben (4a,4b) und der in das Saugrohr hineinragenden umlaufenden Gehäusewand der jeweiligen Scheibe (51) abdichten.

**19.** Ansaugvorrichtung nach Anspruch 17, **dadurch gekennzeichnet, dass**

- die Ansaugvorrichtung (1) durch Auffädeln der Gehäusescheiben (51), der Verstellscheiben (4a, 4b) und dem Antrieb (9) vormontiert ist und anschließend eine dichtende Verbindung zwischen den Gehäusescheiben (51) herstellbar ist.

**Claims**

**1.** Intake apparatus of an internal combustion engine, having a geometry, which is variable within prescribed limits, for the resultant intake pipe, wherein

- selectively a supercharging of the resonance pipe or oscillatory pipe can be established in the entire intake pipe, and

- the geometry of at least one respective oscillatory pipe (S) and of one resonance pipe (R), which is connected via a resonance chamber (42, 43), is variable within prescribed limits, **characterised in that**

- a number of oscillatory pipes (S), corresponding to the number of cylinders of the internal combustion engine, are provided with resonance pipes (R) situated therebetween, **in that**

- adjusting discs (4a) are disposed in the resonance pipes (R), said discs being rotatably driven by a centrally mounted shaft (5) and steplessly varying the effective length of the resonance pipe (R) from a preliminary accumulator (24) to the resonance chamber (42, 43), and **in that**

- adjusting discs (4b) are disposed in the oscillatory pipes (S), said discs being rotatably driven by the central shaft (5) and steplessly varying the effective length of the oscillatory pipe (S) from the resonance chamber (42, 43) to the cylinder inlets of the internal combustion engine.

2. Intake apparatus according to claim 1, **characterised in that**

- the length of the oscillatory pipe (S) and/or of the resonance pipe (R) is steplessly adjustable.

3. Intake apparatus according to one of the previous claims, **characterised in that**

- the adjusting discs (4a, 4b) of the resonance and oscillatory pipes (R, S) are mechanically interconnected in a rotatable manner and accomplish a variation in the resonance and oscillatory pipe lengths in the same direction.

4. Intake apparatus according to one of the preceding claims, **characterised in that**

- an identical number of resonance and oscillatory pipes (R, S) are situated on each respective side of a resonance circuit (33, 34), which interconnects the respective resonance chambers (42, 43) in its open state for supercharging the oscillatory pipes and separates the respective resonance chambers (42, 43) in its closed state for supercharging the resonance pipes.

5. Intake apparatus according to claim 4, **characterised in that**

- an adjusting motor (10) is provided both for changing the angle of rotation of the adjusting discs (4a, 4b) and for actuating the resonance circuit (33, 34).

6. Intake apparatus according to claim 5, **characterised in that**

- the adjusting motor (10) drives a central belt drive (9) or a transmission, which effects the adjustment of the adjusting discs (4a, 4b) and the resonance circuit via the shaft (5).

7. Intake apparatus according to claim 6, **characterised in that**

- the resonance circuit comprises a stationary sealing disc with a window (34) and an appropriately modified adjusting disc with a window (33), which disc rotates jointly with the adjusting discs (4a, 4b).

8. Intake apparatus according to claim 6, **characterised in that**

- the resonance circuit comprises a stationary sealing disc with a window (34) and a variable iris diaphragm with at least one leaf (50).

9. Intake apparatus according to one of claims 1 to 3, **characterised in that**

- a resonance supercharging is achieved in the intake apparatus (1) in all of the operational states of the internal combustion engine, the resonance pipes (R) and the oscillatory pipes (S) being so configured that the resonance pipe lengths and the oscillatory pipe lengths are extended, or respectively are shortenable, by different amounts when there is a predetermined change of engine speed.

10. Intake apparatus according to claim 9, **characterised in that**

- the different lengths of the resonance pipes (R) and of the oscillatory pipes (S) are achieved by respective adjusting discs (4a, 4b) with different diameters, the housing (2, 3) of the intake apparatus being appropriately reduced in the regions provided with a smaller adjusting disc (4a, 4b), whilst retaining the pipe cross-section.

**11.** Intake apparatus according to one of the preceding claims, **characterised in that**

- a stepped cross-sectional adjustment of at least one resonance pipe (R) is accomplishable via a constriction in the conduit wall, formed by the housing, in a prescribed region of the appropriate resonance pipe (R).

**12.** Intake apparatus according to one of claims 1 to 10, **characterised in that**

- a stepped cross-sectional adjustment of at least one resonance pipe (R) is accomplishable via a displaceable wall in the conduit, formed by the housing, of the appropriate resonance pipe (R).

**13.** Intake apparatus according to one of the preceding claims, **characterised in that**

- the drive (9) is effected via a stepping motor, possibly with an actuating mechanism incorporated therein or via a direct-current motor with a mechanism for detecting the rotational position.

**14.** Intake apparatus according to one of the preceding claims, **characterised in that**

- an apparatus (31, 32) for tensioning the drive belt (11) is provided in the drive (9), said apparatus being so configured that the belt tension can act in both directions.

**15.** Intake apparatus according to one of the preceding claims, **characterised in that**

- the sealing of the oscillatory pipes (S) and resonance pipes (R) from one another and from the preliminary accumulator (24) is effected by means of sealing discs (35) which are formed from resilient sheet steel, said discs having a resilient seal (36) at the junction with the housing (2 or 3) of the intake apparatus, which seal comes to lie on a frictional surface (37) between the adjusting discs (4a, 4b).

**16.** Intake apparatus according to one of the preceding claims, **characterised in that**

- the sealing of the oscillatory pipes (S) and resonance pipes (R) from one another and from the preliminary accumulator (24) is effected by means of sealing discs (35) which are formed from plastics material, said discs having a resilient seal (36) at the junction with the housing (2 or 3) of the intake apparatus, which seal comes to lie on a frictional surface (37) between the adjusting discs (4a, 4b).

**17.** Intake apparatus according to one of the preceding claims, **characterised in that**

- the housing (50) of the intake apparatus (1) is divided vertically in such a manner that individual discs (51) each form the contour of the resonance pipes (R) and the oscillatory pipes (S) with the internally situated adjusting discs (4a, 4b).

**18.** Intake apparatus according to claim 17, **characterised in that**

- sealing lips (54) are provided on the adjusting discs (4a, 4b), and **in that** the sealing lips (54) seal between the adjusting discs (4a, 4b) and the surrounding housing wall of the respective disc (51), said wall protruding into the induction manifold.

**19.** Intake apparatus according to claim 17, **characterised in that**

- the intake apparatus (1) is pre-assembled by lining-up the housing discs (51), the adjusting discs (4a, 4b) and the drive (9), and a sealing connection can subsequently be established between the housing discs (51).

## Revendications

**1.** Dispositif d'aspiration de moteur à combustion interne, comportant un tube d'aspiration à géométrie variable dans des limites données,

- on peut au choix produire dans l'ensemble du tube d'aspiration une suralimentation par tube vibrant ou résonant,
- chaque fois la géométrie d'au moins un tube vibrant (S) et d'un tube résonant (R) couplé par l'intermédiaire d'un volume de résonance (42, 43) pouvant varier dans des limites prédéterminées,

**caractérisé en ce qu'**

- les tubes vibrants (S) sont prévus en nombre correspondant à celui des cylindres, avec des tubes résonants (R) situés entre eux,
- dans les tubes résonants (R) sont montés, avec entraînement en rotation par un arbre central (5), des disques de réglage (4a) qui font varier en continu la longueur active du tube résonant (R), allant d'un précollecteur (24) jusqu'au volume de résonance (42, 43), et

- dans les tubes vibrants (S) sont montés des disques de réglage (4b) entraînés en rotation par l'arbre central (5) et qui font varier en continu la longueur active du tube vibrant (S) allant d'un volume de résonance (42, 43) jusqu'aux entrées des cylindres du moteur à combustion interne.

2. Dispositif d'aspiration selon la revendication 1, **caractérisé en ce que** la longueur du tube vibrant (S) et/ou du tube résonant (R) peut être réglée en continu.

3. Dispositif d'aspiration selon l'une quelconque des revendications précédentes, **caractérisé en ce que** les disques de réglage (4a, 4b) des tubes résonants et des tubes vibrants sont couplés mécaniquement en rotation et font varier les longueurs (R, S) des tubes résonants et vibrants dans le même sens.

4. Dispositif d'aspiration selon l'une quelconque des revendications précédentes, **caractérisé en ce qu'** un même nombre de tubes résonants et vibrants (R, S) se trouvent de part et d'autre d'un circuit de résonance (33, 34) qui, quand il est ouvert, relie entre eux les volumes de résonance (42, 43) pour suralimenter les tubes vibrants et quand il est fermé, sépare les différents volumes de résonance (42, 43) pour suralimenter les tubes de résonance.

5. Dispositif d'aspiration selon la revendication 4, **caractérisé en ce qu'** un moteur de réglage (10) est monté pour faire varier la position angulaire des disques de réglage (4a, 4b) et pour actionner le circuit de résonance (33, 34).

6. Dispositif d'aspiration selon la revendication 5, **caractérisé en ce que** le moteur de réglage (19) entraîne une courroie médiane (9) ou un engrenage qui provoque par l'arbre (5) le déplacement des disques de réglage (4a, 4b) et du circuit de résonance.

7. Dispositif d'aspiration selon la revendication 6, **caractérisé en ce que** le circuit de résonance est composé d'un disque de commutation étanche. fixe, percé d'une fenêtre (34) et d'un disque de réglage, entraîné avec les disques de réglage (4a, 4b) et modifié en correspondance par la présence d'une fenêtre (33).

8. Dispositif d'aspiration selon la revendication 6, **caractérisé en ce que** le circuit de résonance est composé d'un disque de commutation étanche fixe, avec une fenêtre (34) et d'un diaphragme à iris variable comportant au moins une lamelle (50).

9. Dispositif d'aspiration selon l'une quelconque des revendications 1 à 3, **caractérisé en ce que** dans tous les états de fonctionnement du moteur à combustion interne, on réalise une suralimentation par résonance dans le dispositif d'aspiration, configurant les tubes résonants (R) et les tubes vibrants (S) de sorte que quand se produit une certaine variation de la vitesse de rotation, les longueurs des tubes résonants et celles des tubes vibrants sont allongées ou raccourcies de quantités différentes.

10. Dispositif d'aspiration selon la revendication 9, **caractérisé en ce que** les longueurs différentes des tubes résonants (R) et des tubes vibrants (S) sont obtenues en donnant aux disques de réglage respectifs (4a, 4b) des diamètres différents, le boîtier (2, 3) du dispositif d'aspiration étant renfoncé en correspondance dans les zones comportant un disque de réglage (4a, 4b) plus petit, tout en conservant la section tubulaire.

11. Dispositif d'aspiration selon l'une quelconque des revendications précédentes, **caractérisé en ce qu'** une variation étagée de la section d'au moins un tube résonant (R) peut être obtenue en rétrécissant la paroi du canal formée par le boîtier dans une zone prédéterminée du tube résonant (R) correspondant.

12. Dispositif d'aspiration selon l'une quelconque des revendications 1 à 10, **caractérisé en ce qu'** une variation étagée d'au moins un tube résonant (R) peut être obtenue au moyen d'une paroi coulissante montée dans le canal de tube résonant correspondant (R) formé par le boîtier.

13. Dispositif d'aspiration selon l'une quelconque des revendications précédentes, **caractérisé en ce qu'** l'entraînement (9) est assuré par un moteur pas à pas, éventuellement à commande intégrée, ou par un moteur à courant continu équipé d'une reconnaissance de position angulaire.

14. Dispositif d'aspiration selon l'une quelconque des revendications précédentes, **caractérisé en ce qu'** il existe dans l'entraînement (9) pour tendre la courroie d'entraînement (11), un dispositif (31, 32) configuré de manière que la tension de courroie peut s'effectuer dans deux directions.

**15.** Dispositif d'aspiration selon l'une quelconque des revendications précédentes, **caractérisé en ce que** l'étanchéité des tubes vibrants (S) et des tubes résonants (R) les uns par rapport aux autres et par rapport au précollecteur (24) est assurée par des disques d'étanchéité (35), chacun de ces disques présentant un joint élastique (36) le long de la zone où il rejoint le boîtier (1) du dispositif d'aspiration, et venant se placer le long d'une surface de friction (37) entre les disques de réglage (4a, 4b).

**16.** Dispositif d'aspiration selon l'une quelconque des revendications précédentes, **caractérisé en ce que** l'étanchéité des tubes vibrants (S) et des tubes résonants (R) les uns par rapport aux autres et par rapport au précollecteur (24) est assurée par des disques d'étanchéité (35) en tôle d'acier à ressort en plastique, chacun de ces disques présentant un joint élastique (36) le long de la zone où il rejoint le boîtier (1) du dispositif d'aspiration, et venant se placer le long d'une surface de friction (37) entre les disques de réglage (4a, 4b).

**17.** Dispositif d'aspiration selon l'une quelconque des revendications précédentes, **caractérisé en ce que** le boîtier (50) du dispositif d'aspiration (1) est divisé verticalement par des disques individuels (51) formant chacun avec les disques de réglage correspondants (4a, 4b) situés vers l'intérieur, le contour d'un tube résonant (R) ou d'un tube vibrant (S).

**18.** Dispositif d'aspiration selon la revendication 17, **caractérisé en ce que** sur les disques d'étanchéité (4a, 4b) sont montées des lèvres d'étanchéité (54) qui assurent l'étanchéité entre les disques de réglage (4a, 4b) et la paroi périphérique de boîtier de chaque disque (51) qui pénètre dans le tube d'aspiration.

**19.** Dispositif d'aspiration selon la revendication 17, **caractérisé en ce que** le dispositif d'aspiration (1) est pré-assemblé par enfilement des disques de boîtier (51), des disques de réglage (4a, 4b) et de l'entraînement (9), et ensuite on peut réaliser une liaison étanche entre les disques de boîtier (51).

Fig.1

Fig.2

Fig. 3

Fig.4

Fig.5

Fig.5a

Fig.6

Fig.7

Fig.8

**Fig.9**

**Fig.10**

**Fig.11**